# EUROPÄISCHE PATENTANMELDUNG

(11) **EP 3 406 366 A1**
(43) Veröffentlichungstag der Anmeldung: **28.11.2018**
(21) Anmeldenummer: 18172102.8
(22) Anmeldetag: 14.05.2018
(51) Int. Cl.: B21H 7/00, B21B 1/38, F16F 1/18

(54) **VERFAHREN ZUM HERSTELLEN EINES FEDERBLATTS, FEDERBLATT FÜR EINE BLATTFEDER, BLATTFEDER FÜR EINE RADAUFHÄNGUNG EINES KRAFTFAHRZEUGES.**

(30) Priorität: 22.05.2017 AT 2182017
(71) Anmelder: Hendrickson Commercial Vehicle Systems Europe GmbH, 8750 Judenburg (AT)
(72) Erfinder: ZAMBERGER, Jörg, 8753 Fohnsdorf (AT); NATTLAND, Friedhelm, 41564 Kaarst (DE)
(74) Vertreter: Beer & Partner Patentanwälte KG

(57) **Zusammenfassung**

Bei einem Verfahren zum Herstellen eines Federblatts (2, 3) für eine Blattfeder (1), wobei das Federblatt (2, 3) aus einem Profilstab, insbesondere aus einem Profilstab aus Federstahl, hergestellt wird und wobei der Profilstab und das Federblatt (2, 3) zwei Endabschnitte (4a, 4b) und einen sich zwischen den Endabschnitten erstreckenden, mittleren Abschnitt (5) sowie eine Oberseite (12), eine Unterseite (13), zwei Längsseiten (14) und zwei Stirnseiten (15a, 15b) aufweisen, wird wenigstens ein Endabschnitt (4a, 4b) des Profilstabes durch Breite-Walzen derart verformt, dass die Breite (B₃) des Endabschnittes (4a, 4b) des Federblattes (2, 3) über die gesamte Endabschnittslänge (L) oder über einen Teil der Endabschnittslänge (L) kleiner ist, als die Breite (B₁) des angrenzenden, mittleren Abschnittes (5).

## Beschreibung

Die Erfindung betrifft ein Verfahren zum Herstellen eines Federblatts für eine Blattfeder, wobei das Federblatt aus einem Profilstab, insbesondere aus einem Profilstab aus Federstahl, hergestellt wird und wobei der Profilstab und das Federblatt zwei Endabschnitte und einen sich zwischen den Endabschnitten erstreckenden, mittleren Abschnitt sowie eine Oberseite, eine Unterseite, zwei Längsseiten und zwei Stirnseiten aufweisen.

Weiters betrifft die Erfindung ein Federblatt für eine Blattfeder, wobei das Federblatt zwei Endabschnitte und einen sich zwischen den Endabschnitten erstreckenden, mittleren Abschnitt sowie eine Oberseite, eine Unterseite, zwei Längsseiten und zwei Stirnseiten aufweist, und eine Blattfeder, die wenigstens ein solches Federblatt aufweist.

Aus dem Stand der Technik sind viele unterschiedliche Formen von Blattfedern, beispielsweise Parabelfedern oder Lenkerfedern oder Trapezfedern, bekannt. Blattfedern dieser Bauformen, die beispielsweise bei Radaufhängungen von Fahrzeugen, insbesondere von Lastkraftwagen oder Anhängern, Verwendung finden, bestehen aus einem einzelnen Federblatt oder aus mehreren, übereinander angeordneten und zumindest bereichsweise miteinander verbundenen Federblättern, wobei jedes Federblatt zwei Endabschnitte und einen dazwischenliegenden mittleren Abschnitt aufweist. Im mittleren Abschnitt ist ein Klemmbereich vorgesehen, der vorzugsweise eine größere Stärke als die daran angrenzenden Abschnitte des Federblattes aufweist. Eine ein einzelnes oder mehrere erfindungsgemäße/s Federblatt/Federblätter aufweisende, in einem Fahrzeug eingebaute Blattfeder ist im Klemmbereich über eine Verbindungseinrichtung, insbesondere über einen oder mehrere die Blattfeder im Klemmbereich umfassende U-förmige Bolzen oder Formteile, mit einer Radachse oder einem Radachsenbolzen verbunden. Es sind auch Lenkerfedern bekannt, bei denen der mittlere Bereich zumindest auf einer Seite beim Klemmbereich aufhört, so dass zumindest ein Endabschnitt an den Klemmbereich angrenzt. In Hinblick auf die mechanischen Eigenschaften der Blattfeder ist es besonders günstig, wenn das Federblatt bzw. die Federblätter aus Federstahl gefertigt ist/sind.

Bei der Erzeugung von Blattfedern spielt das Gewicht des fertigen Produktes eine entscheidende wirtschaftliche Rolle. Ein Vorteil der Verwendung möglichst leichter Blattfedern im Fahrzeugbau ist die Gewichtsreduktion des gesamten Kraftfahrzeuges, was dazu führt, dass mehr Transportgut unter Einhaltung des zulässigen Maximalgewichtes geladen werden kann. Oft sind LKWs jedoch nicht mit dem maximal möglichen Transportgewicht beladen bzw. die LKWs fahren zum Teil auch unbeladen, wobei der Vorteil einer möglichst leichten Blattfeder darin liegt, dass der Kraftstoffverbrauch gesenkt werden kann. Der größte Vorteil jedoch liegt in der Ersparnis des Materialeinsatzes während des Herstellungsprozesses und der damit einhergehenden Kostenreduktion des fertigen Produktes.

Um Material und somit auch Gewicht einzusparen ist es bekannt, die Endabschnitte eines Federblattes einer Blattfeder, die im Einsatz wesentlich geringeren Belastungen ausgesetzt sind als der mittlere Abschnitt, schmäler als den mittleren Abschnitt auszuführen. Durch diese konstruktive Maßnahme ist eine Materialersparnis möglich, ohne jedoch die Festigkeit und Einsatzfähigkeit der Blattfeder im Wesentlichen zu verringern. Zudem kann das Erfordernis bestehen, dass eine konstruktiv vorgegebene Breite des Endabschnittes realisiert werden muss, um beispielsweise einen unerwünschten Kontakt der Blattfeder mit Anbindungsteilen einer Radaufhängung oder anderen Fahrzeugteilen zu vermeiden.

Um Federblätter bei den gängigen Herstellungsverfahren mit verschmälerten Endabschnitten für Blattfedern herzustellen, werden passend abgelängte Profilstäbe, die das Ausgangsmaterial der Federblätter bilden, als Ganzes oder auch nur bereichsweise erhitzt und auf die benötigte Stärke gewalzt. Anschließend wird einer der/werden die Endabschnitte der Profilstäbe (Halbfertigprodukt) auf die benötigte Breite und Form zugeschnitten, wofür die Profilstäbe als Ganzes oder nur bereichsweise noch einmal erhitzt werden können. Beim Zuschneiden der Randbereiche wird an beiden Längsseiten des Federblattes durch schräg gestellte oder gebogene Schneidemesser oder Schneidestempel Material des Federkörpers abgetrennt bzw. abgekantet. Dabei entsteht jeweils eine dafür charakteristische Schnittkante. Nachteilig an diesem Verfahren ist, dass das abgetrennte Material als Abfall anfällt, der für die weitere Federblattproduktion nicht verwertbar ist. Das dadurch "verlorene" Material kann mehrere Prozent der Masse des gesamten Federkörpers einer Blattfeder ausmachen, was zwar zu einer erwünschten Gewichtsreduktion des Federblattes und somit der Blattfeder führt, jedoch keine Ersparnis an Materialeinsatz mit sich bringt und daher in wirtschaftlicher Hinsicht als ungünstig zu bewerten ist.

Der Erfindung liegt die Aufgabe zu Grunde, ein Verfahren zur Herstellung eines Federblattes für eine Blattfeder, ein Federblatt für eine Blattfeder und eine Blattfeder für Radaufhängungen zur Verfügung zu stellen, welche die Nachteile des Standes der Technik nicht aufweisen.

Gelöst wird diese Aufgabe erfindungsgemäß mit einem Verfahren, welches die Merkmale des Anspruches 1 aufweist.

Weiters wird die Aufgabe durch ein Federblatt gelöst, welches die Merkmale des Anspruches 12 aufweist und durch eine Blattfeder, welche die Merkmale des Anspruches 15 aufweist.

Bevorzugte und vorteilhafte Ausführungsformen der Erfindung sind Gegenstand der Unteransprüche.

Erfindungsgemäß ist vorgesehen, dass bei dem Verfahren wenigstens ein Endabschnitt des Profilstabes durch Breite-Walzen derart verformt wird, dass die Breite des Endabschnittes des Federblattes über die gesamte Endabschnittslänge (L) oder über einen Teil der Endabschnittslänge (L) kleiner ist als die Breite des angrenzenden, mittleren Abschnittes. Somit wird erreicht, dass beim Verringern der Breite der Endabschnitte von Federblättern keine bzw. fast keine Materialabschnitte als Abfall anfallen. Da insgesamt weniger Ausgangsmaterial bzw. ein leichterer Profilstab verwendet werden kann, ist es möglich, bei einem nach dem erfindungsgemäßen Verfahren hergestellten Federblatt bzw. einer Blattfeder Material einzusparen, was wiederum zu einer Gewichts- und Kostenreduktion führt und im Vergleich mit dem Stand der Technik ressourcenschonender ist.

Im Rahmen der Erfindung wird der Begriff Breite-Walzen verwendet für einen Walzvorgang, bei dem die Breite des Endabschnittes des Profilstabs verändert wird. Der Begriff Stärke-Walzen wird für einen Walzvorgang verwendet, bei dem die Stärke des Endabschnittes des Profilstabs verändert wird. Für weitere Walz-Vorgänge, bei denen die Breite und/oder die Stärke des mittleren Abschnittes des Profilstabs verändert wird und bei denen der Profilstab an sich im Wesentlichen in die gewünschte Form des Federblattes gebracht wird, wird der Begriff Profil-Walzen verwendet.

Besonders vorteilhaft ist es, wenn als Ausgangsmaterial für das Federblatt ein Profilstab aus Federstahl verwendet wird. Der Profilstab weist vorzugsweise eine im Wesentlichen rechteckige Profilform mit gegebenenfalls abgerundeten oder abgeschrägten Kanten auf, kann aber im Rahmen der Erfindung auch eine andere Profilform, wie beispielsweise eine I-Profilform oder eine trapezförmige Profilform, aufweisen und/oder aus einem anderen Material, vorzugsweise einem Metall oder einer Metalllegierung, bestehen.

Im Rahmen der Erfindung wird das Ausgangsmaterial für das fertige Federblatt als Profilstab bezeichnet. Ein solcher Profilstab wird durch Profil-Walzen im Wesentlichen in die gewünschte Form des Federblattes gebracht und kann dann als Halbfertigprodukt bezeichnet werden. Im Rahmen der Erfindung wird auch das Halbfertigprodukt als Profilstab bezeichnet. Der im Wesentlichen in die Form des Federblattes gebrachte Profilstab kann nach dem Umformen diversen Vergütungsverfahren unterzogen werden. Im Rahmen der Erfindung wird das fertig geformte und gegebenenfalls nachbearbeitete Produkt als Federblatt bezeichnet.

Der Abstand zwischen den zwei Längsseiten des Profilstabes bzw. des Federblattes wird als "Breite" und der Abstand zwischen Ober- und Unterseite des Profilstabes bzw. des Federblattes als "Stärke" bezeichnet.

Besonders bevorzugt ist eine Durchführungsform des Verfahrens, bei welcher der Profilstab vor dem Profil- und/oder Stärke- und/oder Breite-Walzen zumindest in dem Abschnitt, in dem er gewalzt wird, auf eine Temperatur erhitzt wird, die in einem Verformungstemperaturbereich liegt. Der Verformungstemperaturbereich erstreckt sich insbesondere zwischen 850-1200°C, vorzugsweise zwischen 900-1000°C, kann jedoch auch einen anderen Temperaturbereich umfassen und liegt vorzugsweise über der A3-Temperatur des Ausgangsmaterials des Profilstabes. Denkbar ist auch eine Durchführungsform des Verfahrens, bei welcher der ganze Profilstab oder nur eine Hälfte oder nur ein Bereich des entsprechenden Endabschnittes erhitzt wird. Der Profilstab wird vorzugsweise mit Hilfe eines Gas- oder eines Induktionsofens erhitzt, welcher in bevorzugter Weise als Durchlaufofen konzipiert ist.

Im bevorzugten Verfahren ist vorgesehen, dass die Länge des Endabschnittes des Profilstabes durch den Vorgang des Breite-Walzens vergrößert wird. Dadurch können Federblätter bereitgestellt werden, die die gleiche Länge und gleiche Form bzw. das gleiche Gewicht aufweisen wie Federblätter, die mit herkömmlichen Herstellungsverfahren gefertigt wurden, obwohl die beim erfindungsgemäßen Verfahren als Ausgangsmaterial verwendeten Profilstäbe eine kürzere Ausgangslänge aufweisen als jene, die bei den herkömmlichen Herstellungsverfahren als Ausgangsmaterial verwendet werden. Somit wird die Herstellung eines Federblattes kostengünstiger.

Im einer vorteilhaften Durchführungsform des Verfahrens ist vorgesehen, dass auf den Endabschnitt des Profilstabes während des Breite-Walzens derart ein Gegendruck ausgeübt wird, dass die Stärke des Endabschnittes des Federblattes im Wesentlichen unverändert bleibt. Dieser Gegendruck wird vorzugsweise durch ein weiteres Walzenpaar ausgeübt. Der Vorteil dieser Durchführungsform liegt darin, dass bestehende Vorgaben betreffend die Stärke des Endabschnittes weiterhin erfüllt werden können.

In einer weiteren vorteilhaften Durchführungsform ist vorgesehen, dass der Endabschnitt des Profilstabes durch Breite- und/oder Stärke-Walzen derart verformt wird, dass die Stärke des Endabschnittes des Federblattes in Richtung zur Stirnseite des Endabschnittes hin zumindest abschnittsweise zunimmt und/oder abnimmt. Der Vorteil einer abnehmenden Stärke des Endabschnittes liegt darin, dass weiteres Gewicht eingespart und somit noch weniger Ausgangsmaterial verwendet werden kann. Eine zunehmende Stärke des Endabschnittes kann beim Anordnen einer Buchse in ein im Endabschnitt gerolltes Federauge vorteilhaft sein.

Bei dieser weiteren vorteilhaften Durchführungsform des Verfahrens kann sowohl die Breite als auch die Stärke des Endabschnittes des Profilstabes in einem Verfahrensschritt, vorzugsweise gleichzeitig oder in unmittelbarer Folge, geändert werden. Dabei kann der Endabschnitt je nach räumlicher Lage des Profilstabs durch wenigstens ein Walzenpaar mit horizontal oder vertikal ausgerichteten Rotationsachsen, welches Druck auf die Ober- und Unterseite des Profilstabes ausübt, und wenigstens ein Walzenpaar mit vertikal oder horizontal ausgerichteten Rotationsachsen, welches Druck auf die beiden Längsseiten des Profilstabes ausübt, gewalzt bzw. zwischen den Walzenpaaren hindurchgeführt werden.

Ebenso ist im Rahmen dieser weiteren vorteilhaften Durchführungsform denkbar, dass die Breite und die Stärke des Endabschnittes des Profilstabes in aufeinander folgenden Verfahrensschritten geändert werden, wobei der Endabschnitt je nach räumlicher Lage des Profilstabs in jedem Verfahrensschritt vorzugsweise durch wenigstens ein Walzenpaar mit horizontal oder vertikal ausgerichteten Rotationsachsen gewalzt bzw. hindurchgeführt wird. Durch das Walzenpaar wird Druck auf die beiden Längsseiten bzw. auf die Oberseite und Unterseite ausgeübt. Vorzugsweise wird die Breite/Stärke des Endabschnittes des Profilstabes in einem zuerst stattfindenden Verfahrensschritt geändert, anschließend der Profilstab im Wesentlichen um 90° gedreht, und die Stärke/Breite des Endabschnittes des Profilstabes in einem weiteren, folgenden Verfahrensschritt geändert. Im Rahmen der Erfindung kann vorgesehen sein, zuerst die Stärke und anschließend die Breite oder zuerst die Breite und anschließend die Stärke zu ändern, insbesondere zu verringern.

Vorteilhaft ist es, wenn im Rahmen der beschriebenen, weiteren vorteilhaften Durchführungsform, bei der sowohl die Breite als auch die Stärke des Endabschnittes des Profilstabes geändert werden, die genannten Änderungen durchgeführt werden, so lange die Temperatur des Profilstabes noch im Verformungstemperaturbereich liegt. Dadurch muss der Profilstab nicht noch einmal erhitzt werden bzw. die Änderungsvorgänge, d.h. Breite-Walzen und Stärke-Walzen und ggf. Profil-Walzen, finden in "einer Prozesshitze" statt.

Bevorzugt ist, wenn der Endabschnitt des Profilstabes derart in eine Form gebracht wird, dass die Breite des Endabschnittes des Federblattes ausgehend vom mittleren Abschnitt in Richtung zur entsprechenden Stirnseite hin zumindest abschnittsweise verringert und im Wesentlichen konstant ist.

Ebenso kann im Rahmen der Erfindung bevorzugt sein, wenn der Endabschnitt des Profilstabes derart in eine Form gebracht wird, dass die Breite des Endabschnittes des Federblattes in Richtung zur entsprechenden Stirnseite hin zumindest abschnittsweise im Wesentlichen kontinuierlich abnimmt.

Im Rahmen der Erfindung ist auch eine Ausführungsform denkbar, welche die zuletzt beschriebenen Merkmale miteinander kombiniert, sodass der Endabschnitt des Profilstabes derart in eine Form gebracht wird, dass beispielsweise die Breite des Endabschnittes ausgehend vom mittleren Abschnitt zuerst kontinuierlich abnimmt und anschließend bis zur Stirnseite konstant verläuft oder dass die Breite des Endabschnittes ausgehend vom mittleren Abschnitt zuerst im Wesentlichen sprunghaft abnimmt, dann in Richtung Stirnseite konstant verläuft und anschließend bis zur Stirnseite kontinuierlich abnimmt.

Bevorzugt ist es, wenn für die Änderung der Breite bzw. der Stärke des Profilstabes der Endabschnitt des Profilstabes mit der Stirnseite des Endabschnittes voran zwischen wenigstens ein Walzenpaar geschoben wird, und anschließend der Abstand zwischen den Walzen des Walzenpaares verringert und der zwischen dem wenigstens einem Walzenpaar angeordnete Endabschnitt wieder herausgezogen wird. Vorzugsweise wird dieser Vorgang wenigstens einmal, besser jedoch mehrmals, wiederholt. Ein solcher, einmaliger Vorgang wird als "Stich" oder "Walzstich" bezeichnet. Wenn dieser einmalige Vorgang wiederholt wird, spricht man von mehreren Stichen oder "Walzstichen".

Im Rahmen der Erfindung ist eine Durchführungsform bevorzugt, bei welcher der Endabschnitt des Profilstabes durch Breite-Walzen derart verformt wird, dass die Breite der Stirnseite des Endabschnitts des Federblattes um 5-35%, insbesondere um 10-25%, vorzugsweise um 15-20%, kleiner ist, als die Breite des mittleren Abschnittes.

Bei einer Durchführungsform des Verfahrens wird der Endabschnitt nach dem Walzen zu einem Mittel zum Verbinden des Federblattes mit einem Fahrzeuggestell bzw. mit Anbindungsteilen einer Radaufhängung umgeformt, insbesondere zu einem Federauge gerollt. Ebenso ist eine Durchführungsform denkbar, bei welcher der Endabschnitt in ein Sicherungsmittel, wie eine Sicherheitsumrollung, umgeformt wird.

Erfindungsgemäß ist weiterhin vorgesehen, dass bei einem Federblatt für eine Blattfeder wenigstens ein Endabschnitt des Federblattes durch Breite-Walzen derart verformt ist, dass dessen Breite über die gesamte Endabschnittslänge (L) oder über einen Teil der Endabschnittslänge (L) kleiner ist als die Breite des angrenzenden, mittleren Abschnittes.

Mit dem erfindungsgemäßen Verfahren und dem erfindungsgemäßen Federblatt wird der Vorteil erreicht, dass durch das Breite-Walzen des Endabschnittes kein Schnittgrat entsteht. Somit ist die Verletzungsgefahr verringert und die Betriebssicherheit gesteigert. Zudem wird die Bearbeitung des Federblatts vereinfacht, da ein potentieller Prozess zum Entfernen des Schnittgrates entfällt.

Vorteilhaft ist zudem, dass die seitliche Geometrie des Endabschnitts des Federblatts eine höhere Formgenauigkeit aufweist, da keine Schnittwinkel und kein Schnitteinzug, welche sich nachteilig auswirken, mehr gebildet werden. Eine Schnittoberfläche weist zudem charakteristische, nachteilige Ausrissbereiche auf. Ein weiterer Vorteil der Erfindung liegt darin, dass die seitliche Oberfläche des Endabschnitts des Federblatts eine Walzhaut erhält, die im Vergleich zu einer Schnittoberfläche keine Vorschädigung, z.B. Mikrokerben, aufweist und weniger anfällig gegen Rostangriff ist.

Weitere Einzelheiten, Merkmale und Vorteile der Erfindung ergeben sich aus der nachstehenden Beschreibung unter Bezugnahme auf die angeschlossenen Zeichnungen, in welchen bevorzugte Ausführungsformen des Federblattes dargestellt sind, welches vorzugsweise nach dem erfindungsgemäßen Verfahren hergestellt wird. Es zeigt:
- Fig. 1: eine Seitenansicht einer Ausführungsform einer aus mehreren erfindungsgemäßen Federblättern zusammengesetzten Blattfeder,
- Fig. 2: eine Draufsicht der Blattfeder aus Fig. 1,
- Fig. 3: eine Draufsicht einer Ausführungsform eines Endabschnittes eines erfindungsgemäßen Federblattes,
- Fig. 4: eine Draufsicht einer weiteren Ausführungsform des Endabschnittes des erfindungsgemäßen Federblattes,
- Fig. 5: eine Draufsicht einer weiteren Ausführungsform des Endabschnittes des erfindungsgemäßen Federblattes,
- Fig. 6: eine Draufsicht einer weiteren Ausführungsform des Endabschnittes des erfindungsgemäßen Federblattes,
- Fig. 7: eine Draufsicht einer weiteren Ausführungsform des Endabschnittes des erfindungsgemäßen Federblattes,
- Fig. 8: eine Seitenansicht einer Ausführungsform des Endabschnittes des erfindungsgemäßen Federblattes,
- Fig. 9: eine Seitenansicht einer weiteren Ausführungsform des Endabschnittes des erfindungsgemäßen Federblattes, und
- Fig. 10: eine Seitenansicht einer weiteren Ausführungsform des Endabschnittes des erfindungsgemäßen Federblattes.

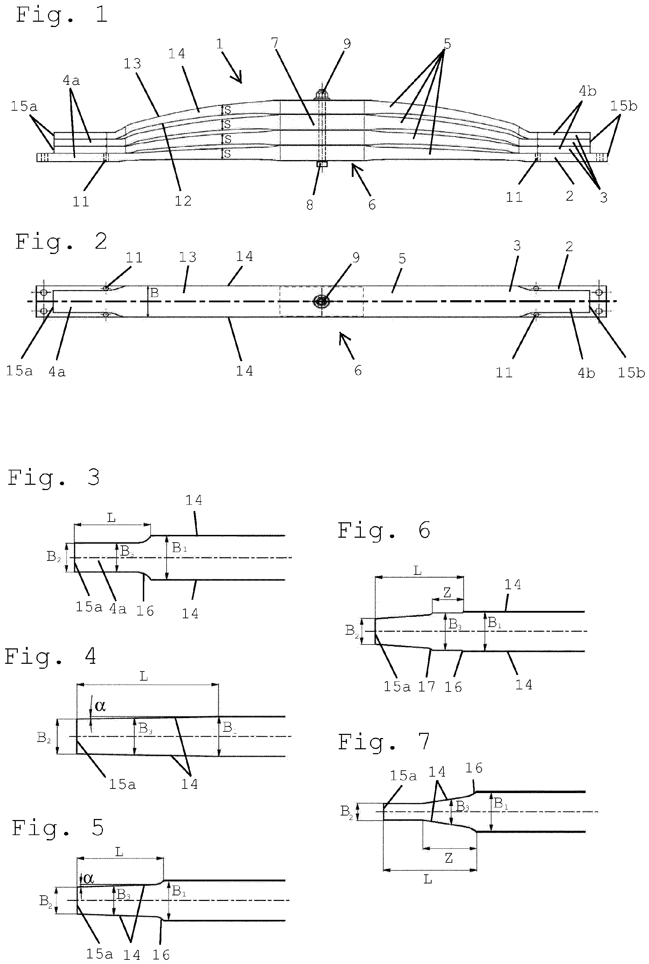

Die Fig. 1 und 2 zeigen eine Blattfeder 1, die ein Grundfederblatt 2, das auch als Führungsfederblatt bezeichnet werden kann, und daran angeordnete weitere Federblätter 3 umfasst. Jedes Federblatt 2, 3 weist zwei Endabschnitte 4a, 4b und einen zwischen den Endabschnitten 4a, 4b angeordneten mittleren Abschnitt 5 auf.

Die Federblätter 2, 3 berühren jeweils ein benachbartes Federblatt 2, 3 bzw. benachbarte Federblätter 2, 3 in den Endabschnitten 4a, 4b und in einem in der Mitte des jeweiligen mittleren Abschnittes 5 angeordneten Klemmbereich 6.

Jedes Federblatt 2, 3 weist ein zentral im Klemmbereich 6 des mittleren Abschnittes 5 angeordnetes Durchgangsloch 7 auf, durch das eine Schraube 8 geführt ist. Eine Mutter 9 ist auf die Schraube 8 aufgeschraubt, sodass die mittleren Abschnitte 5 der Federblätter 2, 3 im Klemmbereich 6 fest aneinandergepresst werden und im Wesentlichen am benachbarten Federblatt 2, 3 bzw. an den benachbarten Federblättern 2, 3 im Wesentlichen plan aufliegen. Im Rahmen der Erfindung sind grundsätzlich auch Ausführungsformen ohne Durchgangsloch 7 möglich, wobei die Federblätter 2 dann z.B. durch Formschlusselemente miteinander verbunden sind.

In den Endabschnitten 4a, 4b des Grundfederblattes 2 sind weitere Durchgangslöcher 11 ausgeführt, durch die nicht dargestellte Anbindungsmittel zum Verbinden der Blattfeder 1 mit Fahrzeugteilen, insbesondere mit einer Achse, geführt werden können.

Jedes Federblatt 2, 3 weist eine Oberseite 12, eine Unterseite 13, zwei Längsseiten 14 und zwei Stirnseiten 15a, 15b auf, wobei der Abstand der Längsseiten 14 zueinander als Breite B und der Abstand der Oberseite 12 zur Unterseite 13 als Stärke S bezeichnet wird.

Die Fig. 3 bis 7 zeigen jeweils eine erfindungsgemäße Ausführungsform des Endabschnittes 4a eines Federblattes 2, 3 mit einer Endabschnittslänge L, der Breite B₁ des mittleren Abschnittes 5, der Breite B₂ der Stirnseite 15a und der Breite B₃ des Endabschnittes 4a zwischen mittlerem Abschnitt 5 und Stirnseite 15a.

Bei dem in Fig. 3 dargestellten Federblatt 2, 3 verringert sich die Breite B₃ des Endabschnittes 4a des Federblattes 2, 3, ausgehend von der Breite B₁ im mittleren Abschnitt 5, innerhalb eines Übergangsbereiches 16 am Beginn des Endabschnittes 4a im Wesentlichen sprunghaft auf die Breite B₂ der dem Endabschnitt 4a zugeordneten Stirnseite 15a. Die Längsseiten 14 verlaufen über die Endabschnittslänge L, abgesehen vom Übergangsbereich 16, im Wesentlichen parallel zueinander.

Die Länge und Form des Übergangsbereiches 16 richtet sich nach den Walzen, welche zur Verringerung der Breite B₃ des Endabschnittes 4a verwendet werden.

Bei dem in Fig. 4 dargestellten Federblatt 2, 3 verringert sich die Breite B₃ des Endabschnittes 4a des Federblattes 2, 3 über die gesamte Endabschnittslänge L kontinuierlich von einer Breite B₁ des mittleren Abschnittes 5 auf eine Breite B₂ der dem Endabschnitt 4a zugeordneten Stirnseite 15a. Die Längsseiten 14 stehen im Endabschnitt 4a schräg zueinander und schließen einen Winkel ein, der dem Doppelten des Schrägungswinkels α entspricht. Jede der Längsseiten 14 ist somit um den Winkel α zur anderen Längsseite 14 hin geneigt.

Das in Fig. 5 dargestellte Federblatt 2, 3 unterscheidet sich von dem in Fig. 3 dargestellte Federblatt 2, 3 lediglich darin, dass die Längsseiten 14 über die Endabschnittslänge L nicht parallel zueinander verlaufen, sondern jeweils um den Winkel α zueinander geneigt sind. Die Breite B₃ des Endabschnittes 4a des Federblattes 2, 3 verringert sich in einem Übergangsbereich 16 ausgehend von einer Breite B₁ des mittleren Abschnittes 5 zuerst sprunghaft und vom Übergangsbereich 16 ab im Wesentlichen kontinuierlich bis zur Stirnseite 15a hin, an der das Federblatt 2, 3 die Breite B₂ aufweist.

Die in den Fig. 6 und 7 dargestellten Ausführungsformen des Endabschnittes 4a eines Federblattes 2, 3 zeigen jeweils eine Kombination der in den Fig. 3 und 5 dargestellten Ausführungsformen.

Bei dem in Fig. 6 dargestellten Federblatt 2, 3 verringert sich die Breite B₃ des Endabschnittes 4a des Federblattes 2, 3 ausgehend von einer Breite B₁ des mittleren Abschnittes 5 zuerst sprunghaft in einem Übergangsbereich 16. In einem anschließenden Zwischenabschnitt, in dem die Längsseiten 14 im Wesentlichen über eine Zwischenabschnittslänge Z, die kleiner ist als die Endabschnittslänge L, parallel zueinander verlaufen, bleibt die Breite B₃ im Wesentlichen konstant. Nach der Zwischenabschnittslänge Z verringert sich die Breite B₃ des Endabschnittes 4a des Federblattes 2, 3 in einem weiteren Übergangsbereich 17 wieder sprunghaft und nimmt im Wesentlichen kontinuierlich von dem weiteren Übergangsbereich 17 bis zur Stirnseite 15a hin, an der das Federblatt 2, 3 die Breite B₂ aufweist, ab.

Bei dem Federblatt 2, 3, wie in Fig. 7 dargestellt, verringert sich die Breite B₃ des Endabschnittes 4a des Federblattes 2, 3 ausgehend von einer Breite B₁ des mittleren Abschnittes 5 in einem Übergangsbereich 16 zuerst sprunghaft und nimmt anschließend über eine Zwischenabschnittslänge Z, die kleiner ist als die Endabschnittslänge L, im Wesentlichen kontinuierlich bis auf die Breite B₂ hin ab. Nach der Zwischenabschnittslänge Z bleibt die Breite B₃ des Endabschnittes 4a im Wesentlichen konstant und gleich der Breite B₂ der Stirnseite 15a und die Längsseiten 14 verlaufen im Wesentlichen bis zur Stirnseite 15a hin parallel zueinander.

Die in den Fig. 1 bis 7 dargestellten Federblätter 2, 3 weisen alle in den Endabschnitten 4a eine gleichbleibende Stärke S und gerade bzw. eben auslaufende Endabschnitte 4a auf. Nicht dargestellte Ausführungsformen eines Federblattes 2, 3, mit einer Profilform gemäß einer der Fig. 1 bis 7, bei denen die Stärke S entlang der Endabschnittslänge L zunimmt und/oder abnimmt, sind im Rahmen der Erfindung jedoch ebenso denkbar wie Ausführungsformen eines Federblattes 2, 3, mit einer Profilform gemäß einer der Fig. 1 bis 7, bei denen ein Abschnitt von einem der beiden/von beiden Endabschnitten 4a, 4b zu einem Mittel, insbesondere einem Federauge 18, zum Verbinden des Federblatts 2, 3 mit einem Fahrzeuggestell bzw. mit Anbindungsteilen einer Radaufhängung oder zu einem Sicherungsmittel, insbesondere einer Sicherheitsumrollung 19, geformt ist/sind.

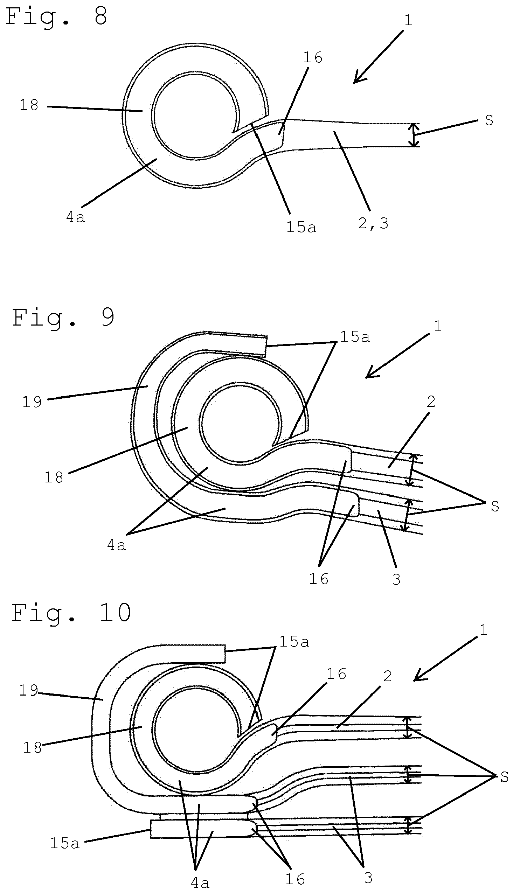

Die Fig. 8 bis 10 zeigen jeweils eine erfindungsgemäße Ausführungsform des Endabschnittes 4a einer ein- oder mehrblättrigen Blattfeder 1 mit jeweils einem Federblatt 2, 3, dessen Endabschnitt 4a zu einem Mittel zum Verbinden des Federblattes 2, 3 mit einem nicht dargestellten Fahrzeuggestell geformt ist.

Fig. 8 zeigt eine einblättrige Blattfeder 1 oder ein einzelnes Federblatt 2, 3 mit einem Endabschnitt 4a der zu einem Federauge 18 gerollt ist.

Fig. 9 zeigt eine zweiblättrige Blattfeder 1 oder zwei aneinander angeordnete Federblätter 2, 3 einer mehrblättrigen Blattfeder 1, wobei der Endabschnitt 4a eines der Federblätter 2, 3 zu einem Federauge 18 und der Endabschnitt 4a des anderen Federblattes 2, 3 zu einer Sicherheitsumrollung 19, die das Federauge 18 wenigstens teilweise umgreift, gerollt ist.

Fig. 10 zeigt eine dreiblättrige Blattfeder 1 oder drei aneinander angeordnete Federblätter 2, 3 einer mehrblättrigen Blattfeder 1, wobei der Endabschnitt 4a eines der Federblätter 3 zu einem Federauge 18 geformt ist, der Endabschnitt 4a des daran angeordneten Federblattes 3 zu einer Sicherheitsumrollung 19 gerollt ist und der verkürzte Endabschnitt 4a des daran angeordneten Grundfederblattes 2 eben ausläuft.

Die Breite B₃ eines jeden Endabschnittes 4a der in den Fig. 8 bis 10 dargestellten Federblätter 2, 3 nimmt beginnend mit dem Übergangsbereich 16 sprunghaft oder kontinuierlich bis zur Stirnseite 15a des Federblattes 2, 3 hin ab.

Die Stärke S eines jeden Federblattes 2, 3 kann im jeweiligen Endabschnitt 4a zur jeweiligen Stirnseite 15a eines jeden Federblattes 2, 3 hin gleichbleiben, zunehmen oder abnehmen.

Im Rahmen der Erfindung ist es grundsätzlich möglich, dass zumindest ein Endabschnitt 4a, 4b direkt an den Klemmbereich 6 angrenzt.

Zusammenfassend kann ein Ausführungsbeispiel der Erfindung wie folgt dargestellt werden:
Bei einem Verfahren zum Herstellen eines Federblatts 2, 3 für eine Blattfeder 1, wobei das Federblatt 2, 3 aus einem Profilstab, insbesondere aus einem Profilstab aus Federstahl, hergestellt wird und wobei der Profilstab und das Federblatt 2, 3 zwei Endabschnitte 4a, 4b und einen sich zwischen den Endabschnitten erstreckenden, mittleren Abschnitt 5 sowie eine Oberseite 12, eine Unterseite 13, zwei Längsseiten 14 und zwei Stirnseiten 15a, 15b aufweisen, wird wenigstens ein Endabschnitt 4a, 4b des Profilstabes durch Breite-Walzen derart verformt, dass die Breite B₃ des Endabschnittes 4a, 4b des Federblattes 2, 3 über die gesamte Endabschnittslänge L oder über einen Teil der Endabschnittslänge L kleiner ist, als die Breite B₁ des angrenzenden, mittleren Abschnittes 5.

## Patentansprüche

1. Verfahren zum Herstellen eines Federblatts (2, 3) für eine Blattfeder (1), wobei das Federblatt (2, 3) aus einem Profilstab, insbesondere aus einem Profilstab aus Federstahl, hergestellt wird und wobei der Profilstab und das Federblatt (2, 3) zwei Endabschnitte (4a, 4b) und einen sich zwischen den Endabschnitten (4a, 4b) erstreckenden, mittleren Abschnitt (5) sowie eine Oberseite (12), eine Unterseite (13), zwei Längsseiten (14) und zwei Stirnseiten (15a, 15b) aufweisen, **dadurch gekennzeichnet, dass** wenigstens ein Endabschnitt (4a, 4b) des Profilstabes durch Breite-Walzen derart verformt wird, dass die Breite (B₃) des Endabschnittes (4a, 4b) des Federblattes (2, 3) über die gesamte Endabschnittslänge (L) oder über einen Teil der Endabschnittslänge (L) kleiner ist als die Breite (B₁) des angrenzenden, mittleren Abschnittes (5).

2. Verfahren nach Anspruch 1, **dadurch gekennzeichnet, dass** der Profilstab vor dem Breite-Walzen zumindest in dem Abschnitt, in dem er gewalzt wird, auf eine Temperatur erhitzt wird, die in einem Verformungstemperaturbereich, insbesondere zwischen 850-1200 °C, vorzugsweise zwischen 900-1000°C, liegt.

3. Verfahren nach Anspruch 1 oder 2, **dadurch gekennzeichnet, dass** die Länge (L) des Endabschnittes (4a, 4b) des Profilstabes durch das Breite-Walzen vergrößert wird.

4. Verfahren nach einem der Ansprüche 1 bis 3, **dadurch gekennzeichnet, dass** auf den Endabschnitt (4a, 4b) des Profilstabes während des Breite-Walzens derart ein Gegendruck ausgeübt wird, dass die Stärke (S) des Endabschnittes (4a, 4b) des Federblattes (2, 3) im Wesentlichen unverändert bleibt.

5. Verfahren nach einem der Ansprüche 1 bis 3, **dadurch gekennzeichnet, dass** der Endabschnitt (4a, 4b) des Profilstabes durch Breite- und/oder Stärke-Walzen derart verformt wird, dass die Stärke (S) des Endabschnittes (4a, 4b) des Federblattes (2, 3) in Richtung zur Stirnseite (15a, 15b) des Endabschnittes (4a, 4b) hin zumindest abschnittsweise zunimmt und/oder abnimmt.

6. Verfahren nach Anspruch 5, **dadurch gekennzeichnet, dass** die Breite (B₃) und die Stärke (S) des Endabschnittes (4a, 4b) des Profilstabes in einem Verfahrensschritt geändert werden, wobei der Endabschnitt (4a, 4b) vorzugsweise durch wenigstens ein Walzenpaar mit horizontal ausgerichteten Rotationsachsen und wenigstens ein Walzenpaar mit vertikal ausgerichteten Rotationsachsen gewalzt wird.

7. Verfahren nach Anspruch 5, **dadurch gekennzeichnet, dass** die Breite (B₃) und die Stärke (S) des Endabschnittes (4a, 4b) des Profilstabes in aufeinander folgenden Verfahrensschritten geändert werden, wobei der Endabschnitt (4a, 4b) vorzugsweise durch wenigstens ein Walzenpaar mit horizontal oder vertikal ausgerichteten Rotationsachsen gewalzt wird, insbesondere dass die Breite (B₃) oder die Stärke (S) des Endabschnittes (4a, 4b) des Profilstabes in einem Verfahrensschritt geändert wird, dass der Profilstab anschließend im Wesentlichen um 90° gedreht wird und dass die Stärke (S) oder die Breite (B₃) des Endabschnittes (4a, 4b) des Profilstabes in einem weiteren Verfahrensschritt geändert wird.

8. Verfahren nach Anspruch 7, **dadurch gekennzeichnet, dass** sowohl die Breite (B₃) als auch die Stärke (S) des Endabschnittes (4a, 4b) des Profilstabes geändert werden, so lange die Temperatur des Profilstabes noch im Verformungstemperaturbereich liegt.

9. Verfahren nach einem der Ansprüche 1 bis 8, **dadurch gekennzeichnet, dass** der Endabschnitt (4a, 4b) des Profilstabes derart in eine Form gebracht wird, dass die Breite (B₃) des Endabschnittes (4a, 4b) des Federblattes (2, 3) ausgehend vom mittleren Abschnitt (5) in Richtung zur entsprechenden Stirnseite (15a, 15b) hin zumindest abschnittsweise verringert und im Wesentlichen konstant ist.

10. Verfahren nach einem der Ansprüche 1 bis 9, **dadurch gekennzeichnet, dass** der Endabschnitt (4a, 4b) des Profilstabes derart in eine Form gebracht wird, dass die Breite (B₃) des Endabschnittes (4a, 4b) des Federblattes (2, 3) in Richtung zur entsprechenden Stirnseite (15a, 15b) hin zumindest abschnittsweise, im Wesentlichen kontinuierlich, abnimmt.

11. Verfahren nach einem der Ansprüche 1 bis 10, **dadurch gekennzeichnet, dass** der Endabschnitt (4a, 4b) des Profilstabes mit der Stirnseite (15a, 15b) des Endabschnittes (4a, 4b) voran zwischen wenigstens ein Walzenpaar geschoben wird, und anschließend der Abstand zwischen den Walzen des Walzenpaares verringert und der Endabschnitt (4a, 4b) des Profilstabes aus dem wenigstens einem Walzenpaar wieder herausgezogen wird, wobei dieser Vorgang vorzugsweise wiederholt wird.

12. Federblatt für eine Blattfeder (1), wobei das Federblatt (2, 3) zwei Endabschnitte (4a, 4b) und einen sich zwischen den Endabschnitten (4a, 4b) erstreckenden, mittleren Abschnitt (5) sowie eine Oberseite (12), eine Unterseite (13), zwei Längsseiten (14) und zwei Stirnseiten (15a, 15b) aufweist, **dadurch gekennzeichnet, dass** wenigstens ein Endabschnitt (4a, 4b) des Federblattes (2, 3) durch Breite-Walzen derart verformt ist, dass dessen Breite (B₃) über die gesamte Endabschnittslänge (L) oder über einen Teil der Endabschnittslänge (L) kleiner ist als die Breite (B₁) des angrenzenden, mittleren Abschnittes (5).

13. Federblatt nach Anspruch 12, **dadurch gekennzeichnet, dass** der Endabschnitt (4a, 4b) eine im Wesentlichen konstante Stärke (S) aufweist oder dass die Stärke (S) des Endabschnittes (4a, 4b) in Richtung zu dessen Stirnseite (15a, 15b) hin zumindest abschnittsweise zunimmt und/oder abnimmt.

14. Federblatt nach Anspruch 12 oder 13, **dadurch gekennzeichnet, dass** die Breite (B₃) des Endabschnittes (4a, 4b) ausgehend vom mittleren Abschnitt (5) verringert ist und zumindest abschnittsweise im Wesentlichen konstant ist und/oder dass die Breite (B₃) des Endabschnittes (4a, 4b) in Richtung zur entsprechenden Stirnseite (15a, 15b) hin zumindest abschnittsweise im Wesentlichen kontinuierlich abnimmt.

15. Blattfeder (1) für eine Radaufhängung eines Kraftfahrzeuges, insbesondere eines Lastkraftfahrzeuges, **dadurch gekennzeichnet, dass** sie wenigstens ein Federblatt (2, 3) nach einem der Ansprüche 12 bis 14 aufweist.
